# EUROPEAN PATENT APPLICATION

(11) **EP 4 687 307 A1**
(43) Date of publication of application: **04.02.2026**
(21) Application number: 25191898.3
(22) Date of filing: 25.07.2025
(51) Int. Cl.: H04B 7/185

(54) **SYSTEM AND METHOD FOR DIRECT TO DEVICE (D2D) DUAL POLARIZATION ALTERNATIVE FOR RECEIVE LINKS**

(30) Priority: 02.08.2024 US 202463678777 P
(71) Applicant: MacDonald, Dettwiler and Associates Corporation, Ste-Anne-de-Bellevue, QC H9X 3R2 (CA)
(72) Inventor: Glâtre, Karim, Sainte-Anne-de-Bellevue, Quebec H9X 3R2 (CA)
(74) Representative: Grünecker Patent- und Rechtsanwälte PartG mbB

(57) **Abstract**

Provided is a system and method for direct-to-device (D2D) communication. The system includes a user device for transmitting a radio frequency (RF) signal in linear polarization and a satellite constellation including a first satellite, and a second satellite. The first satellite is configured to receive the RF signal in left handed circular polarization (LHCP) or right hand circular polarization (RHCP), convert the received RF signal to a first digital signal, and transmit the first digital signal via an optical intersatellite link (OISL). The second satellite is configured to receive the RF signal in an opposite polarization of the first satellite, convert the received RF signal to a second digital signal, receive the first digital signal via the OISL, and recombine the first digital signal and the second digital signal.

## Description

### Technical Field

The following relates generally to satellite communications, and more particularly to systems and methods for direct to device (D2D) satellite communications.

### Introduction

In D2D communication, dual circular polarization direct radiating array antennas may be desired to maximize the gain reception of linearly polarized mobile devices. However, dual circular polarized arrays can be almost two times as expensive as single circular polarization arrays because of the need to double all radio frequency (RF) chains. For example, where an array has 1500 elements, the requirement to add 1500 RF chains to provide dual polarization can increase costs significantly Providing a constellation of satellites with dual circular polarization antennas can be costly. Providing a constellation of satellites with single circular polarization antennas (e.g., all RHCP) can result in significantly reduced performance in D2D as compared to a constellation using dual polarization.

Accordingly, there is a need for an improved system and method for D2D communication that overcomes at least some of the disadvantages of existing systems and methods.

### Summary

Provided is a system for direct-to-device (D2D) communication. The system includes a user device for transmitting a radio frequency (RF) signal in linear polarization and a satellite constellation including a first satellite, and a second satellite. The first satellite is configured to receive the RF signal in left handed circular polarization (LHCP) or right hand circular polarization (RHCP), convert the received RF signal to a first digital signal, and transmit the first digital signal via an optical intersatellite link (OISL). The second satellite is configured to receive the RF signal in an opposite polarization of the first satellite, convert the received RF signal to a second digital signal, receive the first digital signal via the OISL, and recombine the first digital signal and the second digital signal.

The first and second satellites may be next to each other in the constellation.

The second satellite may be configured to transmit the optimized recombined signal to the user device in LHCP or RHCP.

The first satellite may include a receive direct radiating array (DRA) antenna, an analog to digital converter (ADC), an onboard processing (OBP) unit, and an OSIL unit.

The ADC may be configured to convert an analog signal to a digital signal. The OBP unit may be configured to process the digital signal generated by the ADC.

The OSIL signal unit may be configured to generate an optical signal based on an output of the OBP unit. The OSIL signal may include encoded information about the signal received by the antenna.

The OSIL signal unit may be configured to transmit an optical signal generated by the OSIL signal generator via optical intersatellite link.

The first satellite may include a signal recombination module configured to recombine the first digital receive signal from the first satellite and the second digital receive signal from the second satellite to obtain a recombined signal.

A ground segment may include a signal recombination module configured to recombine the first digital receive signal from the first satellite and the second digital receive signal from the second satellite to obtain a recombined signal.

The second digital signal may be recombined by summing the first and second digital signals with a plurality of different phase values to identify an optimized recombined signal having a phase that produces the highest gain.

Information carried by the RF signal includes data including any one or more of internet communications, video calls, messaging, SOS messages, and emergency services.

The satellite constellation may include a third satellite that is next to the second satellite. The third satellite may move into a position previously occupied by the second satellite. Information is communicated between the second satellite and the third satellite for recombining the signal.

Provided is a first satellite configured to receive the RF signal in left handed circular polarization (LHCP) or right handed circular polarization (RHCP), convert the received RF signal to a first digital signal, and transmit the first digital signal via an optical intersatellite link (OISL).

Provided is a second satellite configured to receive the RF signal in left handed circular polarization (LHCP) or right handed circular polarization (RHCP), convert the received RF signal to a second digital signal, receive the first digital signal via the OISL, and recombine the first digital signal and the second digital signal.

The second satellite may transmit the optimized recombined signal to a user device in LHCP or RHCP.

Provided is a user device of the system for D2D communication.

Provided is a method of direct to device communication. The method includes transmitting a linear polarization signal from a user device, receiving half power of the linear polarization signal in left handed circular polarization (LHCP) at a first satellite, receiving half power of the linear polarization signal in right handed circular polarization (RHCP) at a second satellite, and recombining a digital LHCP signal from the first satellite and a digital RHCP signal from the second satellite in the digital domain.

The method may further include converting, at the first satellite, a received LHCP signal from the analog domain to the digital domain. The method may further include converting, at the second satellite, a received RHCP signal from the analog domain into the digital domain.

The method may further include sending a digital LHCP signal from the first satellite to the second satellite via an optical intersatellite link (OISL).

The method may further include transmitting the optimized recombined signal from in circular polarization to the user device.

The method may further include receiving the signal at the mobile user device.

The method may further include determining a region of a user device to cover. The method may further include aiming a first receive beam from the first satellite and a second receive beam from the second satellite at the region of the user device.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a system for direct-to-device communication, according to an embodiment;
Figure 2 is a block diagram of the system of Figure in further detail, according to an embodiment; and
Figure 3 is a flowchart of a method of direct-to-device communication, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to satellite communications, and more particularly to systems and methods for direct to device (D2D) satellite communications.

The present disclosure provides systems and methods for D2D communications using a satellite constellation of two or more satellites. The system uses single polarization receive DRAs and alternating polarization from one spacecraft to another. Two opposite circular polarization DRAs are provided on two different spacecraft in the same constellation. The two opposite polarization DRAs aim at a common area (where a mobile user device is located) and the full signal is recombined using the information from each of the DRAs. Signal recombination is performed by a processing unit executing a signal recombination algorithm. The processing unit may be an onboard processor (OBP) on one of the spacecraft or may be located in a ground segment 111 (e.g., ground station). Where the processing unit is on one of the spacecraft, an optical link is used to provide the information from one spacecraft to the other spacecraft (having the OBP) for signal recombination. The present disclosure allows for using single polarization DRAs while still benefiting from higher receive gain once recombined. This may provide significant savings over other approaches using dually polarized DRAs on a single spacecraft. By using two satellite-based receive DRAs with opposite circular polarization and aiming the receive for a common place on the ground and recombining the two signals, the gain may be improved (maximized).

Further, to accommodate one RF chain per element compared to two may save some mass and may also improve that accommodation. By lying all the components on a single face, the saved area may be improved and may improves the overall design.

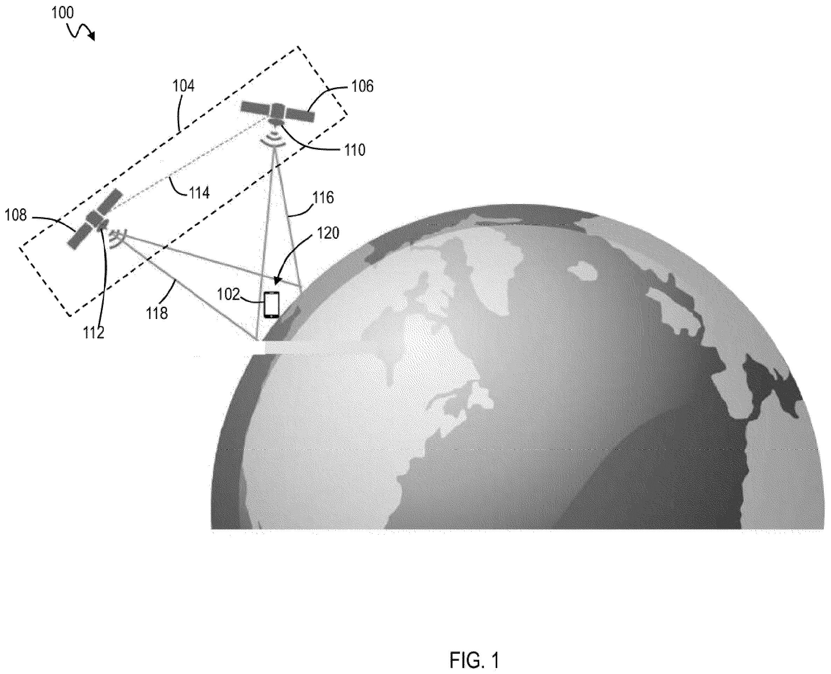

Referring now to Figure 1, shown therein is a system 100 for D2D communication, according to an embodiment.

The system 100 includes a user device 102 and a satellite constellation 104 including at least two satellites 106, 108. The satellite constellation 104 may have more than two satellites and the number of satellites is not particularly limited. In some cases, the number of satellites in the constellation 104 may be in the hundreds (e.g., 200, 400).

The user device 102 and the satellite constellation 104 communicate via radio frequency (RF) signals.

User device 102 includes an antenna that is configured to transmit and receive RF signals in linear polarization.

First satellite 106 includes a receive (Rx) left handed circular polarization (LHCP) direct radiating array (DRA) antenna 110 for communicating with user device 102.

Second satellite 108 includes an Rx right handed circular polarization (RHCP) DRA antenna 112 for communicating with user device 102. Second satellite 108 also includes a transmit (Tx) DRA antenna (not shown) for communicating with user device 102.

DRA antennas 110, 112 may be referred to antennas 110, 112.

Generally, antennas 110, 112 each include a plurality of radiating elements, RF circuits behind each radiating element, and polarizers for each RF chain (a radiating element and an RF circuit), among other components.

In embodiments where the constellation has more than two satellites, the satellites may alternate single circular polarization. For example, a first satellite is LHCP, a second satellite is RHCP, a third satellite is LHCP, a fourth satellite is RHCP, and so on. Adjacent satellites in the constellation generally have opposite single circular polarizations.

In a particular embodiment, the first and second satellites 106, 108 are next to each other in the orbital plane of the constellation. This may be preferred as signals may be received by each satellite with less deformation as a result of traveling through the atmosphere. This can be particularly problematic when the looking angle of the one or more of the satellites is greater. Having satellites that are next to each other in the constellation 104 exchange information may advantageously mean that information is exchanged between two satellites with about the same view of the earth.

First satellite 106 and second satellite 108 communicate with each other via an optical intersatellite link (OISL) 114. A suitable technique for OISL may be used.

The Rx antennas 110, 112 are pointed at a common location where user device 102 is located. The field of coverage of antennas 110, 112 are represented by 116, 118, respectively. The common area 120 is defined by the overlap of antenna 110 coverage and antenna 112 coverage.

The user device 102 transmits an RF signal (or simply signal) in linear polarization.

The linearly polarized signal from the user device 102 is received by antenna 110 on first satellite 106 in LHCP and antenna 112 on second satellite 108 in RHCP.

The first satellite 106 converts the received LHCP signal from the analog domain to the digital domain to obtain a first digital receive signal. This includes processing the first digital signal by a processing unit of the antenna 110 onboard the first satellite 106. The processing includes the use of digital to analog converters. The input is an RF signal and the output is a signal in the digital domain. The processing includes a direct conversion from RF to digital. The digitized signal is then sent to the second satellite. The information carried by that signal includes data (such as internet communications, video calls, messaging, SOS messages, emergency services, etc..).

The first satellite 106 sends the first digital receive signal to the second satellite 108 via OISL 114.

The second satellite 108 converts its received RHCP signal from the analog domain to the digital domain to obtain a second digital receive signal. This includes processing the second digital signal by a processing unit of the antenna 112 onboard the second satellite 108. The processing includes the use of digital to analog converters. The input is an RF signal and the output is a signal in the digital domain. The processing includes a direct conversion from RF to digital. The digitized signal is then sent to the second satellite. The information carried by that signal includes data (such as internet communications, video calls etc..).

The first digital receive signal and the second digital receive signal are recombined in the digital domain by the processing unit of the antenna 112 of the second satellite 108 to obtain a recombined digital receive signal.

The recombined digital receive signal is then converted from the digital domain to the analog domain and transmitted by the transmit antenna of the second satellite 108 to the user device 102.

The transmitted signal is received by the antenna of user device 102 in linear polarization.

It should be noted that while first satellite 106 is described as receiving in LHCP and second satellite is described as receiving in RHCP, this is merely used to illustrate the fact that the two satellites have opposite polarizations (i.e., the polarizations could be switched).

It should further be noted that the satellite constellation 104 may include a third satellite 109 that is next to second satellite 108. As second satellite 108 moves to where first satellite 106 is in Figure 1, the third satellite may then move into the position occupied by second satellite 108 in Figure 1. Information may then be communicated between second satellite and third satellite for recombining the signal.

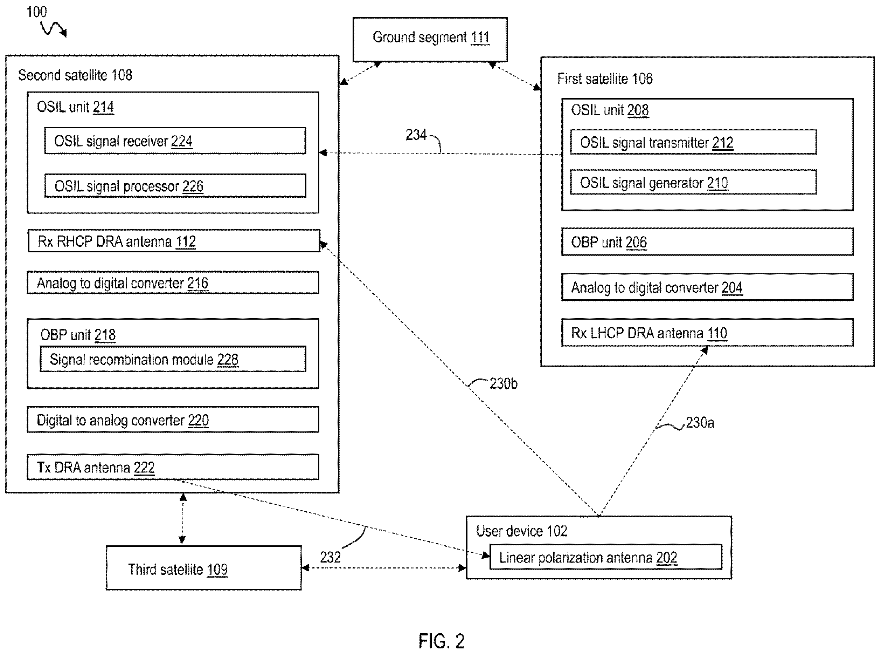

Referring now to Figure 2, shown therein is system 100 in further detail, according to an embodiment.

User device 102 includes a linear polarization antenna 202. The linear polarization antenna 202 is configured to transmit and receive signals (e.g., signals 230a, 230b, 232) in linear polarization.

First satellite 106 includes receive LHCP DRA antenna 110, an analog to digital converter (ADC) 204, an onboard processing (OBP) unit 206, and an OSIL unit 208. The OSIL unit 208 includes an OISL signal generator 210 and an OSIL signal transmitter 212.

The receive LHCP DRA antenna 110 is configured to receive signals in LHCP (e.g., signal 230a).

The ADC 204 is configured to convert an analog signal received by the antenna 110 to a digital signal. This may also be referred to as converting the signal from the analog domain to the digital domain.

The OBP unit 206 is configured to process the digital signal generated by the ADC 204. The OBP unit 206 may transparently send the digital signal. The OBP unit 206 may demodulate/remodulate the digital signal in a regenerative mode. The information sent after processing is the digital signal.

The OSIL signal generator 210 is configured to generate an optical signal based on an output of the OBP unit 206. The OSIL signal encodes information about the signal received by the antenna 110.

The OSIL signal transmitter 212 is configured to transmit an optical signal 234 generated by the OSIL signal generator 210 via optical intersatellite link.

Second satellite 108 includes an OSIL unit 214, receive RHCP DRA antenna 112, an analog to digital converter 216, an OBP unit 218, a digital to analog converter (DAC) 220, and transmit DRA antenna 222. The OSIL unit 214 includes an OSIL signal receiver 224 and an OSIL signal processor 226. The OBP unit 218 includes a signal recombination module 228.

The OSIL signal receiver 224 is configured to receive an optical signal 234 sent via optical intersatellite link.

The OSIL signal processor 226 is configured to decode the optical signal and convert the optical signal into a digital signal that can be processed by the OBP unit 218.

The receive RHCP DRA antenna 112 is configured to receive signals in RHCP (e.g., signal 230b).

The ADC 216 is configured to convert an analog signal received by the antenna 112 to a digital signal.

The OBP unit 218 is configured to process the digital signal generated by the ADC 216. The output of the OBP unit 218 is the digital signal.

The signal recombination module 228 executed by the OBP unit 218 is configured to recombine the first digital receive signal from the first satellite 106 and the second digital receive signal from the second satellite 108 to obtain a recombined signal. The two signals RHCP and LHCP are recombined by summing the RHCP signal with the LHCP with a specific phase. The specific phase is determined to maximize the gain of the reception. The specific phase determines the orientation of the linear pol signal. The orientation of the linear pol signal may be the sum of two circular pol signals to result in a linear pol signal.

The signal recombination module 228 is configured to sum the first digital receive signal (LHCP) and the second digital receive signal (RHCP), which produces a linearly polarized signal (recombined signal). The signal recombination module 228 may implement a phase scanning process whereby the first and second digital receive signals are summed with a plurality of different phase differences. The signal recombination module 228 analyzes the output of the scanning process and determines which phase produces a recombined signal with the highest gain or signal over noise. The signal recombination module 228 includes a defined process to find the phase. For example, the defined process may include an instance sweep through different phase values (e.g., from 0 to 360) to determine the best combination of phase values. The gain/SNR (signal to noise ratio) may be determined by comparison for different combinations. The highest (e.g., best) SNR may be determined from the sweep. The signal recombination module 228 may operate very quickly using the defined process. The signal recombination module 228 outputs an optimized recombined signal (the recombined signal with the best gain).

The DAC 220 is configured to convert a digital signal to an analog signal. This may also be referred to as converting the signal from the analog domain into the digital domain. The DAC 220 converts the optimized recombined signal from the digital domain to the analog domain.

The transmit DRA antenna 222 is configured to transmit the optimized recombined analog signal (e.g., signal 232) generated by the DAC 220.

In another embodiment, the signal recombination module 228 may be executed by one or more computer systems located in the ground segment 111. For example, each satellite 106, 108 may generate their respective OBP outputs based on the received LHCP and RHCP signals and then transmit the outputs in the analog domain to the ground segment 111 (e.g., a ground station) where the signals are recombined and processed to produce an optimized recombined signal. The optimized recombined signal with phase information may then be transmitted from the ground segment to satellite 106, satellite 108, or another satellite for transmitting to the user device 102. In other embodiments, the signal recombination module 228 may be implemented on a satellite other than first or second satellite 106, 108 on another spacecraft. Generally, the processing may be carried out at any location, with the embodiment shown in Figure 2 providing certain advantages. Advantages of processing on the second satellite over ground or some other satellite may include any one or more of less latency processing directly in space, and no additional sites dedicated to processing on Earth. Advantages for ground include making it easier to have more processing power, and not being not sensitive to overall power consumption.

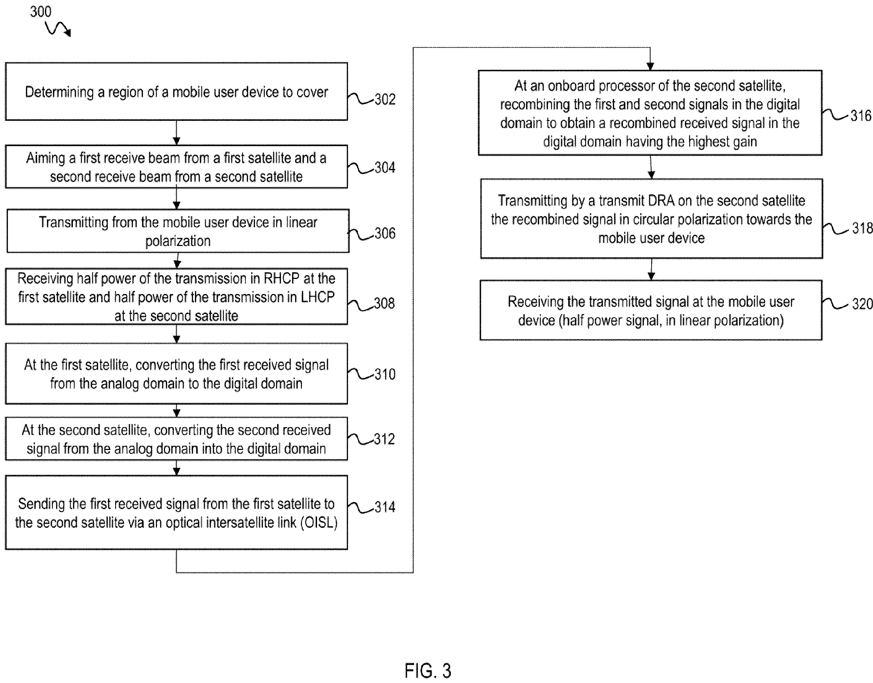

Referring now to Figure 3, shown therein is a method 300 of D2D communication using at least two satellites, according to an embodiment. The method 300 may be implemented by system 100 of Figures 1-2.

At 302, the method 300 includes determining a region of a mobile user device to cover.

At 304, the method 300 includes aiming a first receive beam from a first satellite and a second receive beam from a second satellite at the region determined at 302.

At 306, the method 300 includes transmitting from the mobile user device in linear polarization.

At 308, the method 300 includes receiving half power of the linear pol transmission from 306 in LHCP at a receive DRA antenna of the first satellite and half power of the linear pol transmission from 306 in RHCP at a receive DRA antenna of the second satellite.

At 310, the method 300 includes converting, at the first satellite, the received LHCP signal from 308 from the analog domain to the digital domain.

At 312, the method 300 includes converting, at the second satellite, the received RHCP signal from 308 from the analog domain into the digital domain.

At 314, the method 300 includes sending the digital LHCP signal obtained at 312 from the first satellite to the second satellite via an OSIL.

At 316, the method 300 includes recombining, at an onboard processor of the receive DRA antenna of the second satellite, the digital LHCP signal from the first satellite and the digital RHCP signal from the second satellite (from 310, 312) in the digital domain. This includes summing the digital LHCP and RHCP signals with various phase values to obtain a recombined digital signal. The recombined signal may be a linearly polarized signal. The recombined signal may be equivalent to the linear pol initial signal. The recombining may include scanning a plurality of phase angles or phase differences between the digital LHCP signal and the digital RHCP signal. The plurality of linearly polarized signals generated by the phase scanning process may then be compared or otherwise analyzed to identify an optimized recombined signal with the best gain or signal-over-noise.

After the optimized recombined signal is determined, the Tx OBP performs a regenerative payload process including demodulation and remodulation.

At 318, the method 300 includes transmitting, by a transmit DRA on the second satellite, the optimized recombined signal from 316 in circular polarization towards the mobile user device. The recombined signal may be single pol. The recombined signal may be dual pol and phased to maximize received data by the user device. The transmit DRA may be configured to transmit in single circular polarization.

At 320, the method 300 includes receiving the signal from 322 at the mobile user device. The signal may be half the power of the transmitted signal in linear polarization.

While the above description provides examples of one or more apparatus, methods, or systems, it will be appreciated that other apparatus, methods, or systems may be within the scope of the claims as interpreted by one of skill in the art.

## Claims

1. A system for direct-to-device (D2D) communication, the system comprising:
a user device for transmitting a radio frequency (RF) signal in linear polarization; and
a satellite constellation including:
a first satellite configured to:
receive the RF signal in left handed circular polarization (LHCP) or right handed circular polarization (RHCP);
convert the received RF signal to a first digital signal; and
transmit the first digital signal via an optical intersatellite link (OISL); and
a second satellite configured to:
receive the RF signal in an opposite polarization of the first satellite;
convert the received RF signal to a second digital signal;
receive the first digital signal via the OISL; and
recombine the first digital signal and the second digital signal.

2. The system of claim 1, wherein the first and second satellites are next to each other in the constellation.

3. The system of claim 1, wherein the second satellite is configured to transmit the optimized recombined signal to the user device in LHCP or RHCP.

4. The system of claim 1, wherein the first satellite includes a receive direct radiating array (DRA) antenna, an analog to digital converter (ADC), an onboard processing (OBP) unit, and an OSIL unit.

5. The system of claim 4, wherein the ADC is configured to convert an analog signal to a digital signal, and wherein the OBP unit is configured to process the digital signal generated by the ADC.

6. The system of claim 5, wherein the OSIL signal unit is configured to generate an optical signal based on an output of the OBP unit, and wherein the OSIL signal encodes information about the signal received by the antenna.

7. The system of claim 6, wherein the OSIL signal unit is configured to transmit an optical signal generated by the OSIL signal generator via optical intersatellite link.

8. The system of claim 4, wherein the first satellite includes a signal recombination module configured to recombine the first digital receive signal from the first satellite and the second digital receive signal from the second satellite to obtain a recombined signal.

9. The system of claim 4, wherein a ground segment includes a signal recombination module configured to recombine the first digital receive signal from the first satellite and the second digital receive signal from the second satellite to obtain a recombined signal.

10. The system of claim 1, wherein the second digital signal is recombined by summing the first and second digital signals with a plurality of different phase values to identify an optimized recombined signal having a phase that produces the highest gain.

11. The system of claim 1, wherein the satellite constellation includes a third satellite that is next to the second satellite, and the third satellite moves into a position previously occupied by the second satellite, and wherein information is communicated between second the satellite and the third satellite for recombining the signal.

12. A method of direct to device communication, the method comprising:
transmitting a linear polarization signal from a user device;
receiving half power of the linear polarization signal in left handed circular polarization (LHCP) at a first satellite; and
receiving half power of the linear polarization signal in right handed circular polarization (RHCP) at a second satellite; and
recombining a digital LHCP signal from the first satellite and a digital RHCP signal from the second satellite in the digital domain.

13. The method of claim 12 further comprising:
converting, at the first satellite, a received LHCP signal from the analog domain to the digital domain; and
converting, at the second satellite, a received RHCP signal from the analog domain into the digital domain.

14. The method of claim 13 further comprising sending a digital LHCP signal from the first satellite to the second satellite via an optical intersatellite link (OISL).

15. The method of claim 14 further comprising transmitting the optimized recombined signal from in circular polarization to the user device.
